(19) Europäisches Patentamt

European Patent Office

Office européen des brevets

(11) Publication number : **0 278 725 B1**

(12) **EUROPEAN PATENT SPECIFICATION**

(45) Date of publication of patent specification :
03.04.91 Bulletin 91/14

(51) Int. Cl.⁵ : **B65G 27/08**

(21) Application number : 88301062.1

(22) Date of filing : 09.02.88

(54) **Conveyor system.**

(30) Priority : 09.02.87 GB 8702863

(43) Date of publication of application :
17.08.88 Bulletin 88/33

(45) Publication of the grant of the patent :
03.04.91 Bulletin 91/14

(84) Designated Contracting States :
AT BE CH DE ES FR GB IT LI NL

(56) References cited :
DE-A- 2 052 013
GB-A- 2 052 680
US-A- 3 380 572
US-A- 3 817 370

(73) Proprietor : **AJ & PK ENGINEERING LTD.**
**21 Leigh Road**
**Andover Hampshire SP10 2AS (GB)**

(72) Inventor : **Jacobs, Alan Frederick James**
**60 Eastfield Road Andover**
**Hampshire (GB)**

(74) Representative : **Turner, Paul Malcolm et al**
**URQUHART DYKES & LORD 8 Lindsay Road**
**Poole Dorset BH13 6AR (GB)**

Jouve, 18, rue Saint-Denis, 75001 PARIS

## Description

The present invention relates to a conveyor system and in particular to a tubular conveyor system.

Tubular conveyor systems are known in which tubes mounted on resilient springs or pistons are vibrated, for example, US-A-3063546 describes a vibratory system supported by lower elements on resilient means. US-A-3348664 describes a vibratory system having an open feeder trough actuated by an exciter through a spring assembly mounted from below. US-A-3380572 describes a conveying member mounted on spring means and operated by a cyclical force.

US-A-4527747 describes a tubular conveyor system with a spraying system. The conveyor system is basically a conveyor chute which allows the goods to travel down the chute and at the same time be subjected to perpendicular forces to remove any particles adhering to the goods.

EP-A-114837 describes a further development wherein the machine has a long trough or tube shape material carrier and a linear oscillation generator. This carrier acts as a heat exchanger.

Other prior art such as DE-C-639878 ; DE-B-1047993 ; DE-B-1220976 ; DE-B-1926291 ; DE-B-2052013 ; DE-A-2410341 ; DE-C-2853344 ; DE-A-3332490 ; describes various tubular conveyors mounted in general on side springs.

SU-A-751732 and SU-A-967910 generally describe known oscillatable conveyors supported from beneath, the conveyor oscillations occurring in transverse direction.

US-A-3380572 describes a vibratory conveyor system wherein an elongate conveyor tube is supported by resilient members mounted on an elongate support which comprises a hollow tubular member filled with ballast material such as sand. An electric motor is mounted on the support member and drives an eccentric weight shaft also on the support member to impart vibration to that support member. This vibration is transferred to the conveyor tube via the resilient supporting members.

This arrangement of vibrating the support member tends to cause migration of the ballast along its length, particularly when the conveyor system generally is mounted on an incline as is often the case, and this causes high internal stresses within the system necessitating a rugged and heavy construction.

The present invention attempts to overcome the limitations of the prior art by providing a closed conveying system to prevent the escape of toxic materials including dust which can be harmful to the environment and which can be constructed from readily available materials of comparatively light section.

This has the advantage of being capable of mounting not only on the floor but from an integral roof section of a building.

Accordingly, the present invention provides a conveyor system comprising a support frame, an elongate transport member, an elongate support member mounted on the support frame, the support member comprising a central spine, resilient suspension means for suspending the elongate transport member from the central spine of the support member, a drive means capable of causing cyclic eccentric motion to be imparted to the elongate transport member to cause material within the transport member to be moved therealong, characterised in that the drive means comprises an electric motor connected to an eccentric drive which is further connected to the transport member by means of a drive arm, and wherein the drive means are mounted on the central spine of the support member.

The present invention will be further described with reference to the accompanying drawings in which :

Figure 1 shows a general perspective view of the apparatus of the present invention ;

Figure 2 shows a perspective view of a closure valve used in conjunction with the apparatus of Figure 1 ;

Figure 3 shows a perspective view of a flexible joint used in conjunction with the apparatus of Figure 1 ;

Figure 4 is a cross sectional view of the conveyor of Figure 1 ;

Figure 5 shows a perspective view of a sieve unit used in conjunction with the apparatus of Figure 1 ;

Figures 7 and 8 show a general perspective view of alternative embodiments of the present invention ;

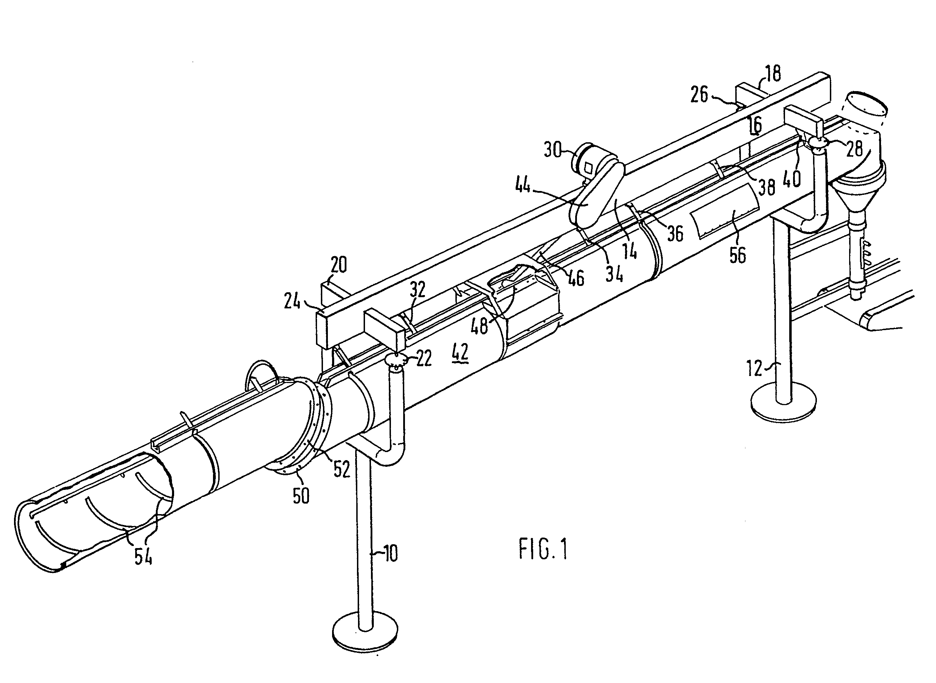

Referring to Figure 1, an upstanding support structure 10 and 12 supports a beam forming a chassis 14. The chassis 14 comprises a beam 16 and cross beams 18 and 20 respectively, mounted on anti-vibration pads preferably made of resilient rubber 22, 24, 26, 28 connecting the upstanding support structures 10 and 12. The vibration pads may include air at a pressure of about 6 to 6.5 bar. Mounted on the beam 16 is a motor 30 which is preferably a variable speed unit.

Slung beneath the beam 16 by means of leaf springs 32, 34, 36, 38 is transport member preferably comprising a tube 42 which is preferably elongate closed tube. The tube may be approximately 10 metres long and approximately 250 millimetres in diameter. Although these sizes are indicated it should be realised that they are not limiting and the size would be determined according to the use of the tubular conveyor. In addition, although six supporting springs 32, 34, 36, 38, 40 are shown any number may be used according to the uniformity of vibration and length of tube. The springs are preferably leaf springs and preferably arranged in parallel spaced apart arrangement.

The leaf springs are made of any suitable spring material but are preferably made of glass fibre. The leaf springs preferably are inclined between the tube and the supporting beam from which they are slung. An eccentric drive 44 connects to a drive arm 46 which is attached to the conveyor tube 42 by means of a gudgeon pin 48.

At the end of the conveyor tubes 42 are flanges 50 and 52 which allows the tube to be connected to adjacent tubes by means of a flexible web material such as terylene. The tube may of course be connected to a fixed conveyor at this point via the flexible web material 50 or 52 as shown or be connected to a further conveyor tube unit of the present invention. Thus, a unit has been described and if desired multiple units may be made up of the single unit described.

Within the conveyor tube 42 can be incorporated a number of items such as semi-circular baffles 54 which may have a baffle plane which is inclined to the longitudinal axis of the tube 42. In an alternative, sieve units may be included as will be hereinafter described.

Other features which may be included in the conveyor tube include cleaning hatches, flexible joints which allow the tubes to be mounted at variable angles e.g. perpendicularly to one another or at an angle to one another.

The main purpose of the conveyor tube of the present invention is to convey materials from one end of the tube to another and the tube may be inclined for this purpose such that the materials are moved upwards or downwards from one end to the other as desired.

In operation, the motor 30 drives the eccentric 44 which causes the drive arm 46 to oscillate. As the drive arm 46 is connected via the gudgeon pin 48 to the conveyor tube 42, the conveyor tube oscillates exactly in a similar manner. The leaf springs prevent uncontrolled oscillation of the tube 42 and the anti-vibration pads 22, 24, 26, 28 prevent the vibration from being transmitted to the support structure 10 and 12.

The eccentric rotational motion of the tube 42 causes material contained within the tube to be lifted and as the tube drops on return stroke, material within the tube moves in a longitudinal direction along the tube. The internal baffles 54 prevent the return of the material once it falls back to the bottom of the tube 42.

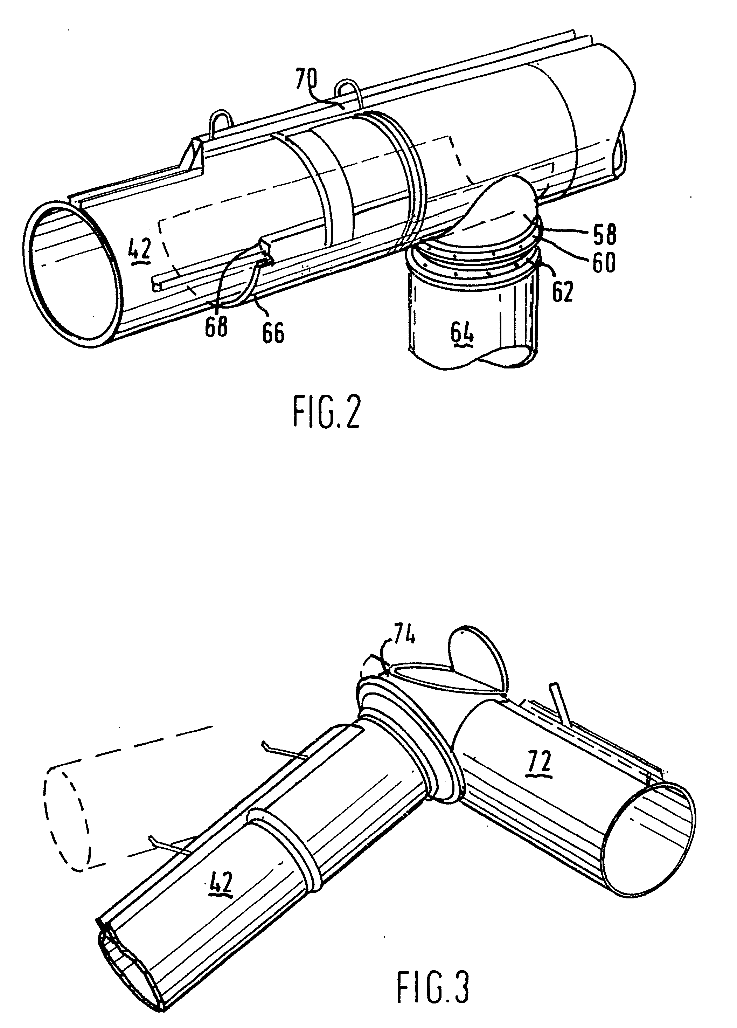

The conveyor tube 42 may have right angle joints with inspection hatches 56 as shown in figure 1 or may have right angle junctions as shown in figure 2. The junction has a joining piece 58 with a flange 60 connected via a flexible web material in a tubular form 62 to a further conveyor tube 64. As also shown in figure 2 a trap door may be included in a slidable form. The trap door may include the slidable door 66 running on a rail 68 mounted each side of the conveyor tube 42. The trap door 66 may attain a closed position shown by the dotted lines which blocks off the entrance to the conveyor tube 64. When in an open position the trap door slides back leaving the entrance to the tube 64 available for material to pass down. The slidable trap door 66 slides within a enlarged radius tube 70 to provide the internal closing of the tube 64. Although the conveyor tube 64 is shown in a downward position, it is to be understood that this tube may extend at right angles at any direction upwards sideways etc or, alternatively, extend at an angle to the main conveyor tube 42.

Referring now to figure 3, a transition joint is shown which connects once conveyor tube 42 to a second conveyor tube 72 by means of a right angle joint 74. The joint 74 is rigidly fixed to the tube 72 but flexibly linked to the tube 42 to allow each of the tubes 42 and 72 to swing through the arcs shown.

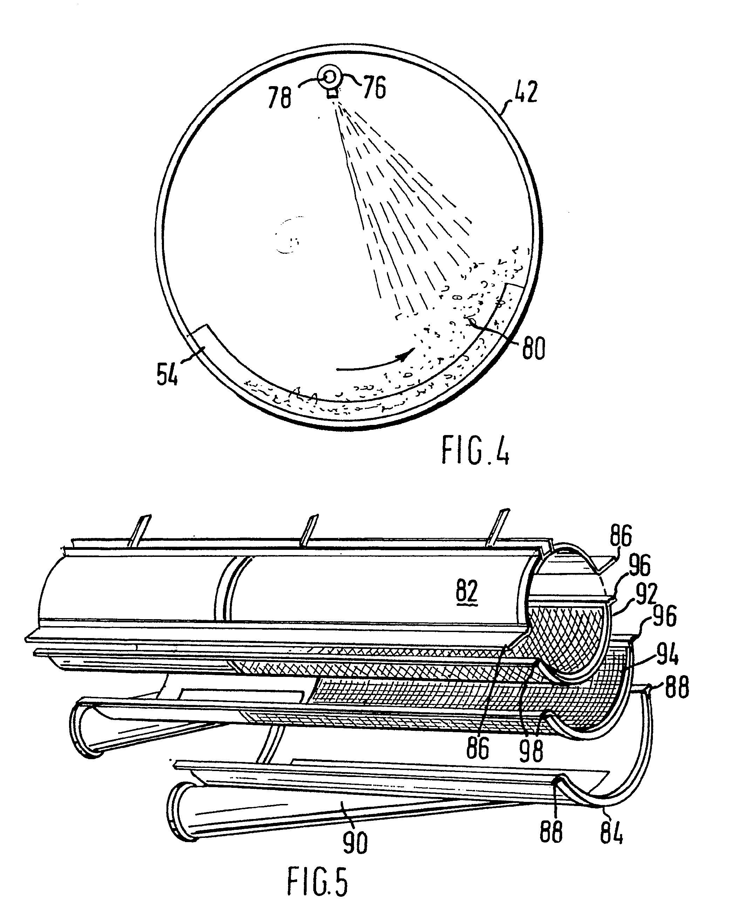

As shown in cross-section in figure 4 a moisturising unit can be incorporated within the tube. The conveyor tube 42 shown in cross-section has internal baffles 54 also shown in cross-section and situated above the material is the spray nozzle 76 attached to a pipe 78 running longitudinally inside the conveyor tube 42 of figure 1. The spray tube may be connected to suitable forms of flexible hosing outside the tube 42 to allow liquid to be sprayed onto the contents 80 of the conveyor tube 42 as they pass along the internal bore of the tube 42.

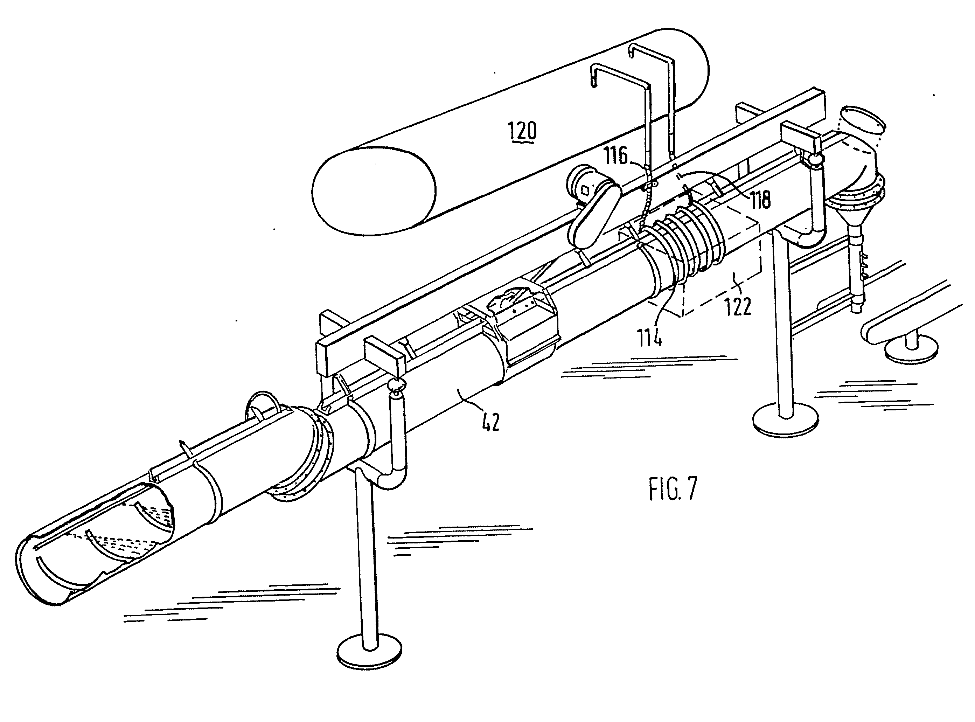

As shown in figure 5 a suitable sieve unit may also be incorporated in the conveyor tube 42. In this embodiment the conveyor tube 42 or portion thereof 82 may be divided into two semi-circular portions 82, 84 having flanges 86 and 88 for joining the two portions together. Between the upper and lower portions 82 and 84 may be included sieves 92 and 94 having semi-circular cross-sections and flanges 96 and 98 for interconnection with the flanges of the main portion of the conveyor tubes 82 and 84. Extending at an inclined angle from the sieves 92 and 94 are pipes which allow the material which passes through the sieves to be removed from the conveyor tube. In any number of similar pipe type units can be stacked together to allow removal of sieved material. The eccentric motion of the conveyor tube caused by the eccentric drive is ideal for movement of material across the sieve in a shaking type motion.

A similar arrangement as shown in Figure 1 may be adapted to show various embodiments of the present invention. In particular tube 42 may incorporate Weirs in the bottom part of each tube. A series of weirs are inclined in the direction of travel and end with a vertical face. The rotary motion of the tube in operation causes material to and over the forward face. The forward face prevents the return of the material away from the direction of travel. An optional embodiment is incorporation of airjets or liquid jets at the base of each weir. The airjets can provide, for example, cool air to cool any product passing through the tube 42. The weirs may be incorporated in one or more adjacent tubes as desired.

If desired a cyclone can be connected to an outlet tube to remove any dust contained within the air of the tube. The cyclone is a conventional cyclone which allows deposit of particles, dirt or dust at its base. A further optional attachment is a chiller which can pass chilled air into the tube as required. Alternatively the chiller may pass a cooled liquid to the conveyor tube 42 as desired.

Figure 7 shows the conveyor tube 42 encircled by spiral heater or cooling tubes 114. The spiral tubes 114 have inlet and outlet 116 and 118 are preferably made of a flexable material to allow for the rotary motion of the tube 42. The inlet and outlet tubes extend to a heat exchanger.

120 to pass either heating materials or cooling materials through to the heater tubes 114. The spiral tubes 114 can extend longitudinally around the tube 42 as far as is desired to provide the spiral heater tubes for non-direct drying or cooling of material contained within the tube 42.

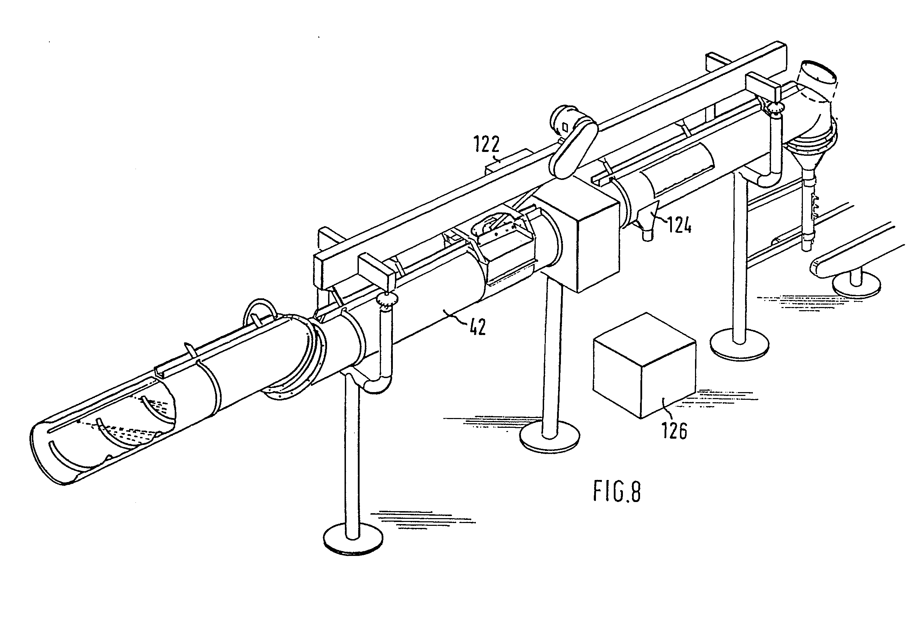

Further adaptions of the conveyor tube 42 are shown in Figure 8. A metal detecting unit 122 extends around the central portion of the conveyor tube 42. The metal detection apparatus may be conventional type metal detection units. On detecting a piece of metal being conveyed along the internal portion of the conveyor tube an alarm can be rung or a trap door can be incorporated to remove that portion of the conveyed material, to be further sieved and processed for return at another point along the tube 42. In the embodiment shown in Figure 8, a trap 124 is provided after the metal detector 122. Any foreign material contained within the conveyor tube 42 passes through the trap 124 and into the collection box 126.

An advantage of the particular type of tube conveyor of the present invention is that the conveyor tube is supported from above by means of the leaf springs. All the mass of the conveyor tube and its contents are therefore in suspension. As a result the conveyor tube itself only needs a single spine for strength at the supporting point of the leaf springs 32, 34, 36, 38 and 40.

The suspended structure need only be simple compared with structure which would be required to support the conveyor tube from below. The supporting structure can be adapted to be mounted in the roof of a particular building. The cylindrical section of the conveyor tube gives inherent strength whilst providing an internal atmosphere to prevent dust from contaminating the working atmosphere. Degradation of the product is also reduced because of the gentle nature of the conveying action.

The tube 42 may be made of any material including aluminium, stainless steel, steel, plastic material, or GRP. The tube may be re-enforced with metal ribs if required or with other materials such as carbon fibre. The actual form of the tube and material it is made of is not significant to the operation of the invention.

**Claims**

1. A conveyor system comprising a support frame (10, 12), an elongate transport member (42), an elongate support member (14) mounted on the support frame, the support member comprising a central spine (16), resilient suspension means (32, 34, 36, 38, 40) for suspending the elongate transport member (42) from the central spine (16) of the support member, drive means capable of causing cyclic eccentric motion to be imparted to the elongate transport member to cause material within the transport member to be moved therealong, characterised in that the drive means comprises an electric motor (30) connected to an eccentric drive (44) further connected to the transport member by means of a drive arm (46), and wherein the drive means are mounted on the central spine (16) of the support member (14).

2. A conveyor system according to claim 1 wherein the suspension means are leaf springs (32-40).

**Ansprüche**

1. Fördersystem mit einem Stützrahmen (10, 11), einem länglichen Transportteil (42), einem länglichen Stützteil (14), das auf dem Stützrahmen angebracht ist, wobei das Stützteil einen zentralen Tragbalken (16), federnde Aufhängemittel (32, 34, 36, 38, 40) zum Aufhängen des länglichen Transportteils (42) an dem zentralen Tragbalken (16) des Stützteils, Antriebsmittel aufweist, von denen zyklische exentrische Bewegungen erzeugbar sind, die auf das längliche Transportteil übertragen werden, so daß Material in dem Transportteil entlang desselben bewegt wird, dadurch gekennzeichnet daß die Antriebsmittel einen Elektromotor (30) aufweisen, der an einen Exzenterantrieb (44) angeschlossen ist, der weiter an dem Transportteil mittels eines Antriebsarms (46) angeschlossen ist, und daß die Antriebsmittel an dem zentralen Tragbalken (16) des Stützteils (14) montiert sind.

2. Fördersystem nach Anspruch 1, bei welchem die Aufhängemittel Blattfedern (32-40) sind.

**Revendications**

1. Système de transport comprenant un cadre support (10, 12), un organe de transport allongé (42), un organe de support allongé (14) monté sur le cadre support, l'organe de support comprenant une barre centrale (16), des moyens de suspension élastiques (32, 34, 36, 38, 40) pour suspendre l'organe de transport allongé (42) à la barre centrale (16) de l'organe de support, des moyens d'entraînement susceptibles de communiquer un mouvement excentrique cyclique à l'organe de transport allongé pour déplacer la matière à l'intérieur de l'organe de transport le long de celui-ci, caractérisé en ce que le moyen d'entraînement comprend un moteur électrique (30) raccordé à un mécanisme d'entraînement excentrique (44) et raccordé à l'organe de transport au moyen d'un bras d'entraînement (46) et en ce que les moyens d'entraînement sont montés sur la barre centrale (16) de l'organe de support (14).

2. Système de transport selon la revendication 1, caractérisé en ce que les moyens de suspension sont des ressorts à lames (32 à 40).

FIG.1

EP 0 278 725 B1

70

42

58
60

62

68    66

64

FIG.2

74

72

42

FIG.3

FIG.4

FIG.5

FIG.7

FIG.8

EP 0 278 725 B1